# EUROPEAN PATENT APPLICATION

(11) **EP 4 557 814 A1**
(43) Date of publication of application: **21.05.2025**
(21) Application number: 22950492.3
(22) Date of filing: 11.07.2022
(51) Int. Cl.: H04W 24/10, H04W 76/11

(54) **COMMUNICATION METHOD AND APPARATUS, AND DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/104947
(87) International publication number: WO 2024/011361

(57) **Abstract**

The embodiments of the present disclosure relate to the technical field of communications. Provided are a communication method and apparatus, and a device and a storage medium, which can be applied to a sensing measurement initiation device. The method comprises: determining a sensing measurement establishment request frame, wherein the sensing measurement establishment request frame comprises a first sensing measurement parameter information element, the first sensing measurement parameter information element comprises a first sensing receiver information domain, the first sensing receiver information domain receives, by means of a first value identification sensing measurement initiation device, a null data packet (NDP) frame during the responder-to-responder (R2R) measurement process of sensing by proxy (SBP), and does not receive the NDP frame during the R2R measurement process by means of a second value identification sensing measurement initiation device; and sending the sensing measurement establishment request frame. An identification means of whether a sensing measurement initiation device receives an NDP frame during an R2R measurement process can be provided in the embodiments of the present disclosure.

## Description

### TECHNICAL FIELD

The embodiments of the present disclosure relate to the field of communication technology. Specifically, the embodiments of the present disclosure relate to a communication method, an apparatus, a device and a storage medium.

### BACKGROUND

With the rapid development of mobile communication technology, wireless fidelity (Wi-Fi) technology has made great progress in transmission rate and throughput.

In the Wi-Fi technology currently being studied, wireless local area network (WLAN) sensing technology may be supported. For example, application scenarios such as location discovery, proximity detection, and presence detection in dense environments (such as home environments and corporate environments). In the process of WLAN sensing measurement of wireless local area network, there is sensing by proxy (SBP) measurement.

The SBP measurement includes responder (Access Point, AP) to responder (R2R) measurement in the SBP measurement. In the R2R measurement process, AP (that is, the sensing measurement initiating device in the WLAN sensing measurement process) transmits a trigger frame to the stations (STAs) participating in the WLAN sensing measurement, and one of the STAs participating in the WLAN sensing measurement transmits an NDP frame to other STAs. After receiving the NDP frame, other STAs perform WLAN sensing measurement. At the same time, the AP can also receive the NDP frame and perform WLAN sensing measurement. However, there is no consensus on how to identify whether the sensing measurement initiating device receives the NDP frame during the R2R measurement process.

### SUMMARY

The embodiments of the present disclosure provide a communication method, an apparatus, a device, and a storage medium, which can provide a way to identify whether a sensing measurement initiating device receives an NDP frame during an R2R measurement process.

According to a first aspect of the embodiments of the present disclosure, there is provided a communication method, performed by a sensing measurement initiating device, including:
determining a sensing measurement setup request frame, where the sensing measurement setup request frame includes a first sensing measurement parameter information element, the first sensing measurement parameter information element includes a first sensing receiver information field, the first sensing receiver information field identifies that the sensing measurement initiating device receive an Null Data Packet NDP frame during a responder to responder R2R measurement process in a sensing by proxy SBP through a first value, and identifies that the sensing measurement initiating device does not receive the NDP frame during the R2R measurement process through a second value; and
transmitting the sensing measurement setup request frame.

According to a second aspect of the embodiments of the present disclosure, there is provided a communication method, performed by a sensing measurement responding device, including:
receiving a sensing measurement setup request frame, where the sensing measurement setup request frame includes a first sensing measurement parameter information element, the first sensing measurement parameter information element includes a first sensing receiver information field, the first sensing receiver information field identifies that a sensing measurement initiating device receives an Null Data Packet NDP frame during a responder to responder R2R measurement process in a sensing by proxy SBP through a first value, and identifies that the sensing measurement initiating device does not receive the NDP frame during the R2R measurement through a second value.

According to a third aspect of the embodiments of the present disclosure, there is provided a communication device, including:
a determining unit, configured to determine a sensing measurement setup request frame, where the sensing measurement setup request frame includes a first sensing measurement parameter information element, the first sensing measurement parameter information element includes a first sensing receiver information field, the first sensing receiver information field identifies that a sensing measurement initiating device receives an Null Data Packet NDP frame during a responder to responder R2R measurement process in a sensing by proxy SBP through a first value, and identifies that the sensing measurement initiating device does not receive the NDP frame during the R2R measurement process through a second value; and
a first transceiver unit, configured to transmit the sensing measurement setup request frame.

According to a fourth aspect of the embodiments of the present disclosure, there is provided a communication device, including:
a second transceiver unit, configured to receive a sensing measurement setup request frame, where the sensing measurement setup request frame includes a first sensing measurement parameter information element, the first sensing measurement parameter information element includes a first sensing receiver information field, the first sensing receiver information field identifies that a sensing measurement initiating device receives an Null Data Packet NDP frame during a responder to responder R2R measurement process in a sensing by proxy SBP through a first value, and identifies that the sensing measurement initiating device does not receive the NDP frame during the R2R measurement through a second value.

According to a fifth aspect of the embodiments of the present disclosure, there is provided a SBP responding device, including a memory, a processor, and a computer program stored on the memory and executable on the processor. The processor implements the method according to the first aspect of the embodiments of the present disclosure when executing the program.

According to a sixth aspect of the embodiments of the present disclosure, there is provided a SBP initiating device, including a memory, a processor, and a computer program stored on the memory and executable on the processor. The processor implements the method according to the second aspect of the embodiments of the present disclosure when executing the program.

According to a seventh aspect of the embodiments of the present disclosure, there is provided computer-readable storage medium, where a computer program is stored on the computer-readable storage medium, and when the computer program is executed by a processor, any one of methods according to the embodiments of the present disclosure is implemented.

In the embodiments of the present disclosure, a way may be provided to indicate, through a sensing measurement setup request frame, whether a sensing measurement initiating device receives an NDP frame during an R2R measurement process.

Additional aspects and advantages of the embodiments of the present disclosure will be partially given in the description below, which will become apparent from the description below, or will be learned through the practice of the present disclosure.

### BRIEF DESCRIPTION OF THE DRAWINGS

In order to more clearly illustrate the technical solution of the embodiment of the present disclosure, the following will briefly introduce the drawings required for use in the description of the embodiment of the present disclosure. Obviously, the drawings described below are only some embodiments of the present disclosure. For those skilled in the art, other drawings can be obtained based on these drawings without inventive labor.
FIG. 1 is a schematic diagram of an architecture of WLAN sensing measurement provided by an embodiment of the present disclosure;
FIG. 2 is a schematic diagram of communication connection provided by an embodiment of the present disclosure;
FIG. 3 is a schematic diagram of another architecture of WLAN sensing measurement provided by an embodiment of the present disclosure;
FIG. 4 is a flow diagram of a communication method provided by an embodiment of the present disclosure;
FIG. 5 is another flow diagram of a communication method provided by an embodiment of the present disclosure;
FIG. 6 is a structural diagram of a communication device provided by an embodiment of the present disclosure;
FIG. 7 is another structural diagram of a communication device provided by an embodiment of the present disclosure;
FIG. 8 is a structural diagram of an electronic device provided by an embodiment of the present disclosure.

### DETAILED DESCRIPTION

In the embodiments of the present disclosure, the term "and/or" describes the association relationship of the associated objects, indicating that there may be three relationships. For example, A and/or B can represent: A exists alone, A and B exist at the same time, and B exists alone. The character "/" generally indicates that the objects associated before and after are in an "or" relationship.

In the embodiments of the present disclosure, the term "multiple" refers to two or more, and other quantifiers are similar.

Here, the example embodiments will be described in detail, and examples thereof are shown in the accompanying drawings. When the following description refers to the drawings, unless otherwise indicated, the same numbers in different drawings represent the same or similar elements. The embodiments described in the following example embodiments do not represent all embodiments consistent with the present disclosure. Instead, they are merely examples of devices and methods consistent with some aspects of the present disclosure as detailed in the attached claims.

The terms used in the present disclosure are for the purpose of describing specific embodiments only and are not intended to limit the present disclosure. The singular forms "a", "an", "said" and "the" used in the present disclosure and the attached claims are also intended to include the plural forms unless the context clearly indicates other meanings. It should also be understood that the term "and/or" used herein refers to and includes any or all possible combinations of one or more associated listed items.

It should be understood that although the terms first, second, third, etc. may be used in the present disclosure to describe various information, such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, for example, the word "if" used herein may be interpreted as "at..." or "when..." or "in response to determining".

The technical scheme in the embodiments of the present disclosure will be clearly and completely described below in conjunction with the drawings in the embodiments of the present disclosure. Obviously, the described embodiments are only part of the embodiments of the present disclosure, not all of them. Based on the embodiments in the present disclosure, all other embodiments obtained by those skilled in the art without inventive work are within the scope of protection of the present disclosure.

The method and the device are based on the same public concept. Since the principles of solving the problem by the method and the device are similar, the implementation of the device and the method can refer to each other, and the repetition will not be repeated.

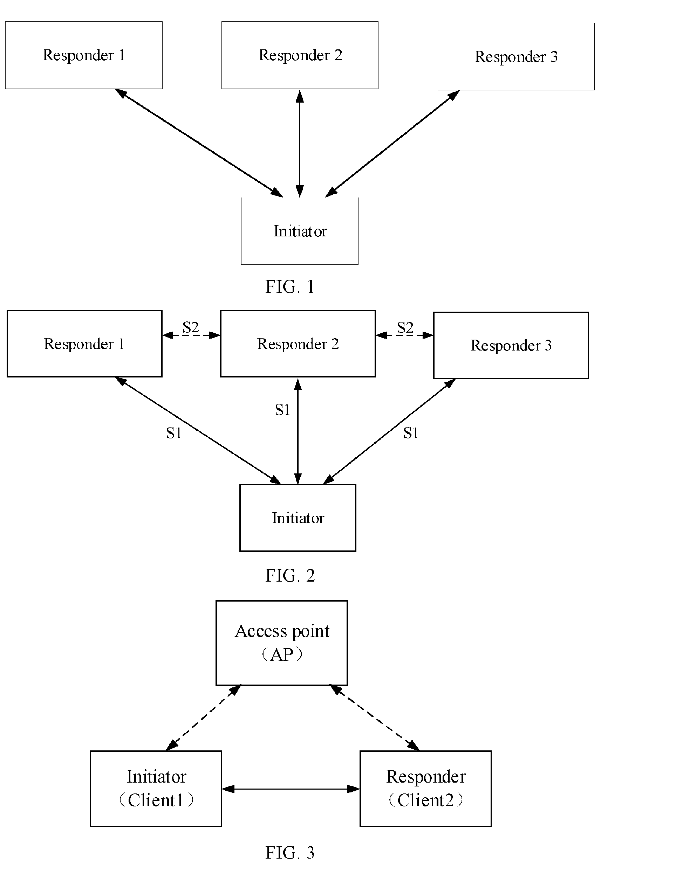

As a first example, referring to FIG. 1 to FIG. 3, an architecture of the WLAN sensing measurement to which the communication method provided in the embodiments of the present disclosure is applied and the WLAN sensing measurement process are first introduced.

FIG. 1 shows a schematic diagram of the architecture of a WLAN sensing measurement; where a sensing initiator initiates a WLAN sensing measurement (e.g., initiates a WLAN sensing measurement session), and there may be multiple sensing responders responding to it, e.g., Responder 1, Responder 2, and Responder 3 shown in FIG. 2. When the sensing initiator initiates a WLAN sensing measurement, multiple associated or unassociated sensing responders for the WLAN sensing measurement may respond.

Here, "associated" may refer to that an initial associated connection for communication is established between the sensing initiator and the sensing responder, and "unassociated" may refer to that an initial associated connection for communication is not established between the sensing initiator and the sensing responder.

Referring to FIG. 2, the sensing initiator and the sensing responder communicate via a communication connection, as shown by communication connection S1; the sensing responders communicate via communication connection S2.

Each sensing initiator may be a client; and each sensing responder (in this example, sensing responder 1 to sensing responder 3) may be a station (STA) or an access point (AP).

The AP is a wireless switch for a wireless network and also an access device for a wireless network. The AP may include software applications and/or circuits to enable other types of nodes in the wireless network to communicate with the outside and inside of the wireless network through the AP. As an example, the AP may be a terminal device or a network device equipped with a Wi-Fi chip.

As another architecture, as shown in FIG. 3, the sensing initiator and the sensing responder may also be clients, and the two may communicate by connecting to the same access point (AP). In FIG. 3, Client1 is the sensing initiator and Client2 is the sensing responder.

In the WLAN sensing measurement process, in order to realize one-to-many communication between the STA as the sensing initiator and the sensing responder, the STA acts as a Sensing By Proxy (SBP) initiating device to initiate the SBP process; the AP acts as an SBP responder (the SBP responding device is used as an example in the following description) to proxy the STA to perform WLAN sensing measurement.

The SBP initiating device, the SBP responding device, and the STA participating in the WLAN sensing measurement may include but are not limited to: cellular phones, smart phones, wearable devices, computers, personal digital assistants (PDAs), personal communication system (PCS) devices, personal information managers (PIMs), personal navigation devices (PNDs), global positioning systems, multimedia devices, Internet of Things (IoT) devices, etc.

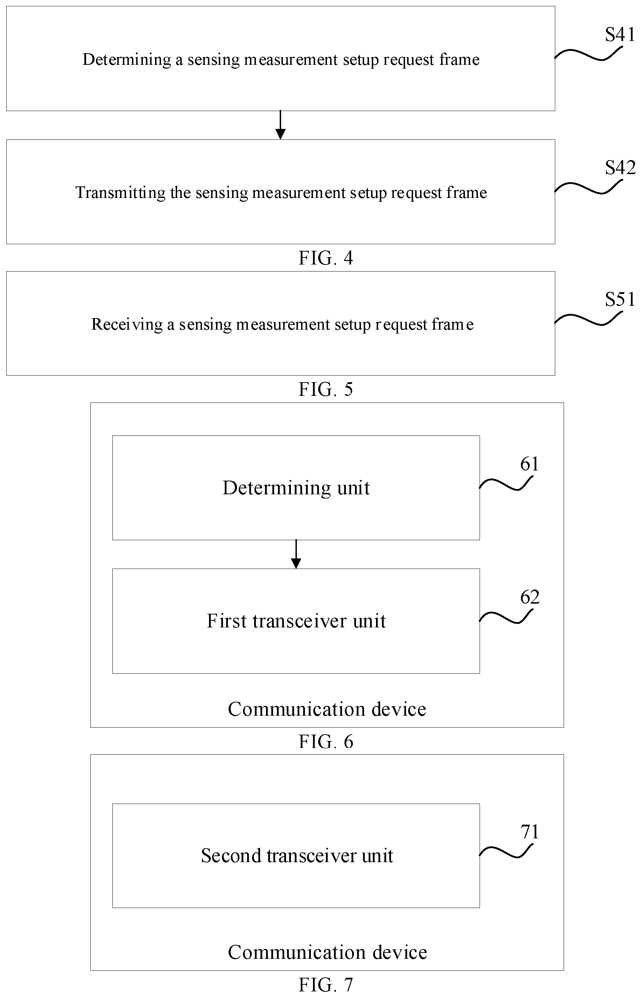

A communication method provided by an embodiment of the present disclosure may be specifically referred to in FIG. 4, which is a flow chart of a communication method provided by an embodiment of the present disclosure. In some examples, the method may be applied to a sensing measurement initiating device, where the sensing measurement initiating device is also an SBP responding device in the process of establishing an SBP measurement. The SBP responding device (responder) may be an AP. The method may include the following steps:
Step S41, determining a sensing measurement setup request frame.

The sensing measurement setup request frame includes a first sensing measurement parameter information element, and the first sensing measurement information element includes a first sensing receiver information field.

The first sensing receiver information field may be composed of at least one bit.

The first sensing receiver information field identifies that the sensing measurement initiating device receives a Null Data Packet (NDP) frame during the R2R measurement process through a first value, and identifies that the sensing measurement initiating device does not receive an NDP frame during the R2R measurement process through a second value.

The first value and the second value are different values.

As an example, when the value of the first sensing receiver information field is 1, it indicates that the sensing measurement initiating device receives the NDP frame during the R2R measurement process, that is, it indicates that the sensing measurement initiating device is the receiver of the NDP frame during the R2R measurement process. When the value of the first sensing receiver information field is 0, it indicates that the sensing measurement initiating device does not receive the NDP frame during the R2R measurement process, that is, it indicates that the sensing measurement initiating device is not the receiver of the NDP frame during the R2R measurement process.

Step S42, transmitting the sensing measurement setup request frame.

As an example, the sensing measurement initiating device transmits the sensing measurement setup request frame to the sensing measurement responding device, and whether the sensing measurement initiating device receives the NDP frame during the R2R measurement process is indicated, that is, whether the sensing measurement initiating device is the receiver of the NDP frame during the R2R measurement process is identified through the first sensing receiver information field in the first sensing measurement parameter information element.

In the communication method applied to the sensing measurement initiating device provided in the present disclosure, the first sensing measurement information element includes first indication information, and the first indication information indicates a request for R2R measurement setup.

The first indication information may be represented by an independent identification bit or a related information field (such as a measurement type field), which is not limited here.

The R2R measurement belongs to one of trigger based (TB) measurements.

In the communication method for a sensing measurement initiating device provided in the present disclosure, the first sensing measurement information element includes a first sensing measurement report information field.

The first sensing measurement report information field may be composed of at least one bit.

The first sensing measurement report information field identifies that the sensing measurement initiating device does not transmit a sensing measurement result through a third value. For example, regardless of whether the sensing measurement initiating device transmits an NDP frame during the R2R measurement process, the sensing measurement initiating device may identify that it does not transmit the sensing measurement result when the first sensing measurement report information field is the third value.

The first sensing measurement report information field identifies that the sensing measurement initiating device transmits the sensing measurement result through a fourth value. For example, when the transmitter of the NDP frame requires the sensing measurement initiating device to feedback the sensing measurement result, the sensing measurement initiating device may identify that it transmits the sensing measurement result when the first sensing measurement report information field is the fourth value.

The third value and the fourth value are different values.

As an example, when the value of the first sensing measurement report information field is 1, it indicates that the sensing measurement initiating device transmits the sensing measurement result, and when the value of the first sensing measurement report information field is 0, it indicates that the sensing measurement initiating device does not transmit the sensing measurement result.

In the communication method applied to the sensing measurement initiating device provided in the present disclosure, the first sensing measurement information element includes a first sensing transmitter information field.

The first sensing transmitter information field may be composed of at least one bit.

The first sensing transmitter information field indicates that the sensing measurement initiating device does not transmit an NDP frame during the R2R measurement process through a preset value.

The above preset value may be 0, which is not limited here.

In the communication method applied to the sensing measurement initiating device provided in the present disclosure, the sensing measurement setup request frame sent by the sensing measurement initiating device also includes first indication information, and the first indication information indicates the representation manner of multiple information fields included in a second sensing measurement parameter information element in a sensing measurement setup response frame sent by a sensing measurement responding device.

The second sensing measurement parameter information element in the sensing measurement setup response frame includes a second sensing receiver information field, a second sensing transmitter information field, and a second sensing measurement report information field.

That is, the sensing measurement initiating device indicates the representation manner of the second sensing receiver information field, the second sensing transmitter information field, and the second sensing measurement report information field in the sensing measurement setup response frame sent by the sensing measurement responding device through the first indication information in the sensing measurement setup request frame.

The second sensing receiver information field identifies whether the sensing measurement responding device receives the NDP frame during the R2R measurement process. The second sensing transmitter information field identifies whether the sensing measurement responding device transmits the NDP frame during the R2R measurement process. The second sensing measurement report information field identifies whether the sensing measurement responding device transmits the sensing measurement result.

That is, the sensing measurement initiating device uses the first indication information in the sensing measurement setup request frame to indicate how the sensing measurement setup response frame sent by the sensing measurement responding device identifies whether the sensing measurement responding device receives the NDP frame during the R2R measurement process through the second sensing receiver information field, how to identify whether the sensing measurement responding device transmits the NDP frame during the R2R measurement process through the second sensing transmitter information field, and how to identify whether the sensing measurement responding device transmits the sensing measurement result through the second sensing measurement report information field.

In the communication method for the sensing measurement initiating device provided in the present disclosure, the first indication information in the sensing measurement setup request frame can be specifically configured to indicate that the second transmitter information field, the second receiver information field and the second sensing measurement report information field in the second sensing measurement parameter information element of the sensing measurement setup response frame are represented by at least one of the following manners:
the second transmitter information field uses a fifth value to identify that the sensing measurement responding device does not transmit the NDP frame during the R2R measurement process, the second sensing receiver information field uses a sixth value to identify that the sensing measurement responding device receives the NDP frame during the R2R measurement process, and the second sensing measurement report information field uses a seventh value to identify that the sensing measurement responding device transmits the sensing measurement result;
the second transmitter information field uses an eighth value to identify that the sensing measurement responding device transmits the NDP frame during the R2R measurement process, the second sensing receiver information field uses a ninth value to identify that the sensing measurement responding device does not receives the NDP frame during the R2R measurement process, and the second sensing measurement report information field uses a tenth value to identify that the sensing measurement responding device does not transmit the sensing measurement result;
that is, the first indication information can indicate that in a case where the sensing measurement responding device does not transmit the NDP frame during the R2R sensing measurement process, the value of the second transmitter information field included in the second sensing measurement parameter information element in the sensing measurement setup response frame can be set to the fifth value, and at the same time, the value of the second sensing receiver information field included in the second sensing measurement parameter information element can be set to the sixth value to indicate that the sensing measurement responding device receives the NDP frame during the R2R measurement process, and the value of the second sensing measurement report information field included in the second sensing measurement parameter information element can be set to the seventh value to indicate that the sensing measurement responding device transmits the sensing measurement result.

Similarly, the first indication information may indicate that in a case where the sensing measurement responding device transmits the NDP frame during the R2R sensing measurement process, the value of the second transmitter information field included in the second sensing measurement parameter information element in the sensing measurement setup response frame may be set to the eighth value, and at the same time, the value of the second sensing receiver information field included in the second sensing measurement parameter information element may be set to the ninth value to indicate that the sensing measurement responding device does not receive the NDP frame during the R2R measurement process, and the value of the second sensing measurement report information field included in the second sensing measurement parameter information element may be set to the tenth value to indicate that the sensing measurement responding device does not transmit the sensing measurement result.

The fifth value and the eighth value are different values, the sixth value and the ninth value are different values, and the seventh value and the tenth value are different values.

In the communication method applied to the sensing measurement initiating device provided in the present disclosure, after transmitting the sensing measurement setup request frame, the method also includes:
receiving a sensing measurement setup response frame.

The sensing measurement setup response frame includes a second transmitter information field, a second receiver information field, and a second sensing measurement report information field.

The second sensing receiver information field is configured to identify whether the sensing measurement responding device receives the NDP frame during the R2R measurement process, the second sensing transmitter information field is configured to identify whether the sensing measurement responding device transmits the NDP frame during the R2R measurement process, and the second sensing measurement report information field is configured to identify whether the sensing measurement responding device transmits the sensing measurement result.

The second transmitter information field identifies that the sensing measurement responding device does not transmit the NDP frame during the R2R measurement process through the fifth value, the second sensing receiver information field identifies that the sensing measurement responding device receives the NDP frame during the R2R measurement process through the sixth value, and the second sensing measurement report information field identifies that the sensing measurement responding device transmits the sensing measurement result through the seventh value.

That is, in a case where the sensing measurement responding device is the receiver of the NDP frame during the R2R sensing measurement process, the sensing measurement setup response frame sent by the sensing measurement responding device identifies that the sensing measurement responding device does not transmit the NDP frame during the R2R measurement process through the second transmitter information field, identifies that the sensing measurement responding device receives the NDP frame during the R2R measurement process through the second sensing receiver information field, and identifies that the sensing measurement responding device transmits the sensing measurement result through the second sensing measurement report information field.

As an example, in a case where the sensing measurement responding device is the receiver of the NDP frame in the R2R sensing measurement process, the value of the second transmitter information field is 0, which is configured to identify that the sensing measurement responding device does not transmit the NDP frame in the R2R measurement process, the value of the second sensing receiver information field is 1, which is configured to identify that the sensing measurement responding device receives the NDP frame in the R2R measurement process, and the value of the second sensing measurement report information field is 1, which is configured to identify that the sensing measurement responding device transmits the sensing measurement result.

The second transmitter information field identifies that the sensing measurement responding device transmits the NDP frame in the R2R measurement process through the eighth value, the second sensing receiver information field identifies that the sensing measurement responding device does not receive the NDP frame in the R2R measurement process through the ninth value, and the second sensing measurement report information field identifies that the sensing measurement responding device does not transmit the sensing measurement result through the tenth value.

That is, in a case where the sensing measurement responding device is the transmitter of the NDP frame in the R2R sensing measurement process, the sensing measurement setup response frame sent by the sensing measurement responding device identifies that the sensing measurement responding device transmits the NDP frame in the R2R measurement process through the second transmitter information field, identifies that the sensing measurement responding device does not receive the NDP frame in the R2R measurement process through the second sensing receiver information field, and identifies that the sensing measurement responding device does not transmit the sensing measurement result through the second sensing measurement report information field.

As an example, in a case where the sensing measurement responding device is the transmitter of the NDP frame in the R2R sensing measurement process, the value of the second transmitter information field is 1, which is configured to identify that the sensing measurement responding device transmits the NDP frame in the R2R measurement process, the value of the second sensing receiver information field is 0, which is configured to identify that the sensing measurement responding device does not receive the NDP frame in the R2R measurement process, and the value of the second sensing measurement report information field is 0, which is configured to identify that the sensing measurement responding device does not transmit the sensing measurement result.

A communication method provided in an embodiment of the present disclosure can be specifically referred to FIG. 5, which is another flow chart of the communication method provided in an embodiment of the present disclosure. In some examples, the method may be applied to a sensing measurement responding device, and the sensing measurement responding device may be a STA.

The method may include the following steps:
Step S51, receiving a sensing measurement setup request frame.

The sensing measurement setup request frame includes a first sensing measurement parameter information element, and the first sensing measurement information element includes a first sensing receiver information field.

The first sensing receiver information field may be composed of at least one bit.

The first sensing receiver information field identifies that the sensing measurement initiating device receives a Null Data Packet (NDP) frame during the R2R measurement process through a first value, and identifies that the sensing measurement initiating device does not receive an NDP frame during the R2R measurement process through a second value.

The first value and the second value are different values.

As an example, when the value of the first sensing receiver information field is 1, it indicates that the sensing measurement initiating device receives the NDP frame during the R2R measurement process, that is, it indicates that the sensing measurement initiating device is the receiver of the NDP frame during the R2R measurement process. When the value of the first sensing receiver information field is 0, it indicates that the sensing measurement initiating device does not receive the NDP frame during the R2R measurement process, that is, it indicates that the sensing measurement initiating device is not the receiver of the NDP frame during the R2R measurement process.

In the communication method applied to the sensing measurement initiating device provided in the present disclosure, the first sensing measurement information element includes first indication information, and the first indication information is configured to identify a request for R2R measurement setup.

The first indication information may be represented by an independent identification bit or a related information field (such as a measurement type field), which is not limited here.

The R2R measurement belongs to one of trigger based (TB) measurements.

In the communication method for the sensing measurement responding device provided in the present disclosure, the first sensing measurement information element includes a first sensing measurement report information field.

The first sensing measurement report information field may be composed of at least one bit.

The first sensing measurement report information field identifies that the sensing measurement initiating device does not transmit a sensing measurement result through a third value. For example, regardless of whether the sensing measurement initiating device transmits an NDP frame during the R2R measurement process, the sensing measurement initiating device may identify that it does not transmit the sensing measurement result when the first sensing measurement report information field is the third value.

The first sensing measurement report information field identifies that the sensing measurement initiating device transmits the sensing measurement result through a fourth value. For example, when the transmitter of the NDP frame requires the sensing measurement initiating device to feedback the sensing measurement result, the sensing measurement initiating device may identify that it transmits the sensing measurement result when the first sensing measurement report information field is the fourth value.

The third value and the fourth value are different values.

As an example, when the value of the first sensing measurement report information field is 1, it indicates that the sensing measurement initiating device transmits the sensing measurement result, and when the value of the first sensing measurement report information field is 0, it indicates that the sensing measurement initiating device does not transmit the sensing measurement result.

In the communication method applied to the sensing measurement responding device provided in the present disclosure, the first sensing measurement information element includes a first sensing transmitter information field.

The first sensing transmitter information field may be composed of at least one bit.

The first sensing transmitter information field identifies that the sensing measurement initiating device does not transmit an NDP frame during the R2R measurement process through a preset value.

The above preset value may be 0, which is not limited here.

In the communication method applied to the sensing measurement responding device provided in the present disclosure, the sensing measurement setup request frame sent by the sensing measurement initiating device also includes first indication information, and the first indication information indicates the representation manner of multiple information fields included in a second sensing measurement parameter information element in a sensing measurement setup response frame sent by the sensing measurement responding device.

The second sensing measurement parameter information element in the sensing measurement setup response frame includes a second sensing receiver information field, a second sensing transmitter information field, and a second sensing measurement report information field.

That is, the sensing measurement initiating device indicates the representation manner of the second sensing receiver information field, the second sensing transmitter information field and the second sensing measurement report information field in the sensing measurement setup response frame sent by the sensing measurement responding device through the first indication information in the sensing measurement setup request frame.

The second sensing receiver information field identifies whether the sensing measurement responding device receives the NDP frame during the R2R measurement process. The second sensing transmitter information field identifies whether the sensing measurement responding device transmits the NDP frame during the R2R measurement process. The second sensing measurement report information field identifies whether the sensing measurement responding device transmits the sensing measurement result.

That is, the sensing measurement initiating device uses the first indication information in the sensing measurement setup request frame to indicate how the sensing measurement setup response frame sent by the sensing measurement responding device identifies whether the sensing measurement responding device receives the NDP frame during the R2R measurement process through the second sensing receiver information field, how to identify whether the sensing measurement responding device transmits the NDP frame during the R2R measurement process through the second sensing transmitter information field, and how to identify whether the sensing measurement responding device transmits the sensing measurement result through the second sensing measurement report information field.

In the communication method for the sensing measurement responding device provided in the present disclosure, the first indication information in the sensing measurement setup request frame can be specifically configured to indicate that the second transmitter information field, the second receiver information field and the second sensing measurement report information field in the second sensing measurement parameter information element of the sensing measurement setup response frame are represented by at least one of the following manners:
the second transmitter information field uses a fifth value to identify that the sensing measurement responding device does not transmit the NDP frame during the R2R measurement process, the second sensing receiver information field uses a sixth value to identify that the sensing measurement responding device receives the NDP frame during the R2R measurement process, and the second sensing measurement report information field uses a seventh value to indicate that the sensing measurement responding device transmits the sensing measurement result;
the second transmitter information field uses an eighth value to identify that the sensing measurement responding device transmits the NDP frame during the R2R measurement process, the second sensing receiver information field uses a ninth value to identify that the sensing measurement responding device does not receive the NDP frame during the R2R measurement process, and the second sensing measurement report information field uses a tenth value to identify that the sensing measurement responding device does not transmit the sensing measurement results;
that is, the first indication information can indicate that in a case where the sensing measurement responding device does not transmit the NDP frame during the R2R sensing measurement process, the value of the second transmitter information field included in the second sensing measurement parameter information element in the sensing measurement setup response frame can be set to the fifth value, and at the same time, the value of the second sensing receiver information field included in the second sensing measurement parameter information element can be set to the sixth value to indicate that the sensing measurement responding device receives the NDP frame during the R2R measurement process, and the value of the second sensing measurement report information field included in the second sensing measurement parameter information element can be set to the seventh value to indicate that the sensing measurement responding device transmits the sensing measurement result.

Similarly, the first indication information may indicate that in a case where the sensing measurement responding device transmits the NDP frame during the R2R sensing measurement process, the value of the second transmitter information field included in the second sensing measurement parameter information element in the sensing measurement setup response frame may be set to the eighth value, and at the same time, the value of the second sensing receiver information field included in the second sensing measurement parameter information element may be set to the ninth value to indicate that the sensing measurement responding device does not receive the NDP frame during the R2R measurement process, and the value of the second sensing measurement report information field included in the second sensing measurement parameter information element may be set to the tenth value to indicate that the sensing measurement responding device does not transmit the sensing measurement result.

The fifth value and the eighth value are different values, the sixth value and the ninth value are different values, and the seventh value and the tenth value are different values.

In the communication method applied to the sensing measurement responding device provided in the present disclosure, after transmitting the sensing measurement setup request frame, the method also includes:
transmitting a sensing measurement setup response frame.

The sensing measurement setup response frame includes a second transmitter information field, a second receiver information field, and a second sensing measurement report information field.

The second sensing receiver information field is configured to identify whether the sensing measurement responding device receives the NDP frame during the R2R measurement process, the second sensing transmitter information field is configured to identify whether the sensing measurement responding device transmits the NDP frame during the R2R measurement process, and the second sensing measurement report information field is configured to identify whether the sensing measurement responding device transmits the sensing measurement result.

The second transmitter information field identifies that the sensing measurement responding device does not transmit the NDP frame during the R2R measurement process through the fifth value, the second sensing receiver information field identifies that the sensing measurement responding device receives the NDP frame during the R2R measurement process through the sixth value, and the second sensing measurement report information field identifies that the sensing measurement responding device transmits the sensing measurement result through the seventh value.

That is, in a case where the sensing measurement responding device is the receiver of the NDP frame during the R2R sensing measurement process, the sensing measurement setup response frame sent by the sensing measurement responding device identifies that the sensing measurement responding device does not transmit the NDP frame during the R2R measurement process through the second transmitter information field, identifies that the sensing measurement responding device receives the NDP frame during the R2R measurement process through the second sensing receiver information field, and identifies that the sensing measurement responding device transmits the sensing measurement result through the second sensing measurement report information field.

As an example, in a case where the sensing measurement responding device is the receiver of the NDP frame in the R2R sensing measurement process, the value of the second transmitter information field is 0, which is configured to identify that the sensing measurement responding device does not transmit the NDP frame in the R2R measurement process, the value of the second sensing receiver information field is 1, which is configured to identify that the sensing measurement responding device receives the NDP frame in the R2R measurement process, and the value of the second sensing measurement report information field is 1, which is configured to identify that the sensing measurement responding device transmits the sensing measurement result.

The second transmitter information field identifies that the sensing measurement responding device transmits the NDP frame in the R2R measurement process through the eighth value, the second sensing receiver information field identifies that the sensing measurement responding device does not receive the NDP frame in the R2R measurement process through the ninth value, and the second sensing measurement report information field identifies that the sensing measurement responding device does not transmit the sensing measurement result through the tenth value.

That is, in a case where the sensing measurement responding device is the transmitter of the NDP frame in the R2R sensing measurement process, the sensing measurement setup response frame sent by the sensing measurement responding device identifies that the sensing measurement responding device transmit the NDP frame in the R2R measurement process through the second transmitter information field, identifies that the sensing measurement responding device does not receives the NDP frame in the R2R measurement process through the second sensing receiver information field, and identifies that the sensing measurement responding device does not transmit the sensing measurement result through the second sensing measurement report information field.

As an example, in a case where the sensing measurement responding device is the transmitter of the NDP frame in the R2R sensing measurement process, the value of the second transmitter information field is 1, which is configured to identify that the sensing measurement responding device transmits the NDP frame in the R2R measurement process, the value of the second sensing receiver information field is 0, which is configured to identify that the sensing measurement responding device does not receive the NDP frame in the R2R measurement process, and the value of the second sensing measurement report information field is 0, which is configured to identify that the sensing measurement responding device does not transmit the sensing measurement result.

In the embodiment of the present disclosure, a method is provided to identify whether the sensing measurement initiating device transmits the NDP frame, receives the NDP frame, and transmits the sensing measurement report during the R2R measurement process through each information field in the sensing measurement parameter information element of the sensing measurement setup request frame. At the same time, the first indication information in the sensing measurement setup request frame can be configured to indicate the representation manner of each information element in the sensing measurement setup response frame sent by the sensing measurement responding device, so as to indicate how the sensing measurement responding device identifies whether the sensing measurement responding device transmits the NDP frame, receives the NDP frame, and transmits the sensing measurement report during the R2R measurement process, so that the sensing measurement responding device can transmit the sensing measurement setup response frame based on the representation manner identified by the sensing measurement initiating device to set up the R2R measurement.

As shown in FIG. 6, the embodiment of the present disclosure provides a communication device, including:
A determining unit 61, configured to determine a sensing measurement setup request frame. The sensing measurement setup request frame includes a first sensing measurement parameter information element. The first sensing measurement parameter information element includes a first sensing receiver information field. The first sensing receiver information field identifies that the sensing measurement initiating device receives the Null Data Packet NDP frame during the responder to responder R2R measurement in the sensing by proxy SBP through a first value, and identifies that the sensing measurement initiating device does not receive the NDP frame during the R2R measurement process through a second value.

A first transceiver unit 62, configured to transmit the sensing measurement setup request frame.

Alternatively, in the embodiment of the present disclosure, the first sensing measurement parameter information element includes first indication information, and the first indication information is configured to indicate a request for the R2R measurement setup.

Alternatively, in the embodiment of the present disclosure, the first sensing measurement parameter information element includes a first sensing measurement report information field, the first sensing measurement report information field identifies that the sensing measurement initiating device does not transmit the sensing measurement result through a third value, and identifies that the sensing measurement initiating device transmits the sensing measurement result through a fourth value.

Alternatively, in the embodiment of the present disclosure, the above-mentioned sensing measurement setup request frame further includes first indication information, and the above-mentioned first indication information is configured to indicate the representation manner of each information field included in the second sensing measurement parameter information element in the sensing measurement setup response frame sent by the sensing measurement responding device, and the above-mentioned second sensing measurement parameter information element includes a second sensing receiver information field, a transmitter information field and a second sensing measurement report information field.

Alternatively, in the embodiment of the present disclosure, the representation manner of each information field included in the second sensing measurement parameter information element includes at least one of:
the transmitter information field identifies that the sensing measurement responding device does not transmit the NDP frame during the R2R measurement process through the fifth value, the second sensing receiver information field identifies that the sensing measurement responding device receives the NDP frame during the R2R measurement process through the sixth value, and the second sensing measurement report information field identifies that the sensing measurement responding device transmits the sensing measurement result through the seventh value; and
the transmitter information field identifies that the sensing measurement responding device transmits the NDP frame during the R2R measurement process through the eighth value, the second sensing receiver information field identifies that the sensing measurement responding device does not receive the NDP frame during the R2R measurement process through the ninth value, and the second sensing measurement report information field identifies that the sensing measurement responding device does not transmit the sensing measurement result through the tenth value.

Alternatively, in the embodiment of the present disclosure, the first transceiver unit 61 is further configured to:
receive a sensing measurement setup response frame, the sensing measurement setup response frame includes a second sensing measurement information element, the second sensing measurement parameter information element includes a second sensing receiver information field, a transmitter information field and a second sensing measurement report information field;
the transmitter information field identifies that the sensing measurement responding device does not transmit an NDP frame during the R2R measurement process through a fifth value, the second sensing receiver information field identifies that the sensing measurement responding device receives an NDP frame during the R2R measurement process through a sixth value, and the second sensing measurement report information field identifies that the sensing measurement responding device transmits a sensing measurement result through a seventh value;
or, the transmitter information field identifies that the sensing measurement responding device transmits an NDP frame during the R2R measurement process through an eighth value, the second sensing receiver information field identifies that the sensing measurement responding device does not receive an NDP frame during the R2R measurement process through a ninth value, and the second sensing measurement report information field identifies that the sensing measurement responding device does not transmit a sensing measurement result through a tenth value.

As shown in FIG. 7, the embodiment of the present disclosure provides a communication device, including:
a second transceiver unit 71, configured to receive a sensing measurement setup request frame, the sensing measurement setup request frame including a first sensing measurement parameter information element, the first sensing measurement parameter information element including a first sensing receiver information field, the first sensing receiver information field identifying that the sensing measurement initiating device receives an Null Data Packet NDP frame during the responding device and the responding device R2R measurement process in the sensing by proxy SBP through a first value, and identifying that the sensing measurement initiating device does not receive the NDP frame during the R2R measurement process through a second value.

Alternatively, in the embodiment of the present disclosure, the first sensing measurement parameter information element includes first indication information, and the first indication information is configured to indicate a request to setup an R2R measurement.

Alternatively, in the embodiment of the present disclosure, the first sensing measurement parameter information element includes a first sensing measurement report information field, the first sensing measurement report information field identifying that the sensing measurement initiating device does not transmit a sensing measurement result through a third value, and identifying that the sensing measurement initiating device transmits a sensing measurement result through a fourth value.

Alternatively, in the embodiment of the present disclosure, the above-mentioned sensing measurement setup request frame further includes first indication information, and the above-mentioned first indication information is configured to indicate the representation manner of each information field included in the second sensing measurement parameter information element in the sensing measurement setup response frame sent by the above-mentioned sensing measurement responding device, and the above-mentioned second sensing measurement parameter information element includes a second sensing receiver information field, a transmitter information field and a second sensing measurement report information field.

Alternatively, in the embodiment of the present disclosure, the representation manner of each information field included in the second sensing measurement parameter information element includes at least one of:
the transmitter information field identifies that the sensing measurement responding device does not transmit the NDP frame during the R2R measurement process through the fifth value, the second sensing receiver information field identifies the sensing measurement responding device receives the NDP frame during the R2R measurement process through the sixth value, and the second sensing measurement report information field identifies that the sensing measurement responding device transmits the sensing measurement result through the seventh value; and
the transmitter information field identifies that the sensing measurement responding device transmits the NDP frame during the R2R measurement process through the eighth value, the second sensing receiver information field identifies that the sensing measurement responding device does not receive the NDP frame during the R2R measurement process through the ninth value, and the second sensing measurement report information field identifies that the sensing measurement responding device does not transmit the sensing measurement result through the tenth value.

Alternatively, in the embodiment of the present disclosure, the second transceiver unit 71 is further configured to:
transmit a sensing measurement setup response frame, the sensing measurement setup response frame includes a second sensing measurement information element, the second sensing measurement parameter information element includes a second sensing receiver information field, a transmitter information field and a second sensing measurement report information field;
the transmitter information field identifies that the sensing measurement responding device does not transmit an NDP frame during the R2R measurement process through a fifth value, the second sensing receiver information field identifies that the sensing measurement responding device receives an NDP frame during the R2R measurement process through a sixth value, and the second sensing measurement report information field identifies that the sensing measurement responding device transmits a sensing measurement result through a seventh value;
or, the transmitter information field identifies that the sensing measurement responding device transmits an NDP frame during the R2R measurement process through an eighth value, the second sensing receiver information field identifies that the sensing measurement responding device does not receive an NDP frame during the R2R measurement process through a ninth value, and the second sensing measurement report information field identifies that the sensing measurement responding device does not transmit a sensing measurement result through a tenth value.

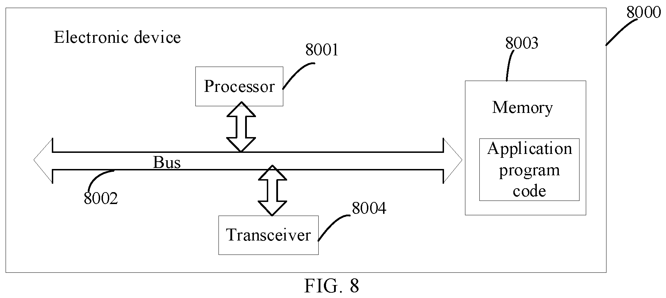

The embodiment of the present disclosure also provides an electronic device, as shown in FIG. 8. The electronic device 8000 shown in FIG8 includes a processor 8001 and a memory 8003. The processor 8001 and the memory 8003 are connected, such as through a bus 8002. Alternatively, the electronic device 8000 may also include a transceiver 8004. It should be noted that in actual applications, the number of the transceivers 8004 is not limited to one, and the structure of the electronic device 8000 does not constitute a limitation on the embodiment of the present disclosure.

The memory 8003 is configured to store the application code for executing the embodiment of the present disclosure, and the execution is controlled by the processor 8001. When the electronic device 8000 is used as a sensing measurement initiating device, the processor 8001 is configured to execute the application code stored in the memory 8003 to implement the communication method applicable to the sensing measurement initiating device in this solution. When the electronic device 8000 is used as a sensing measurement responding device, the processor 8001 is configured to execute the application code stored in the memory 8003 to implement the communication method applicable to the sensing measurement responding device in this solution.

The bus 8002 may include a path to transmit information between the above components. The bus 8002 may be a PCI (Peripheral Component Interconnect) bus or an EISA (Extended Industry Standard Architecture) bus. The bus 8002 may be classified into an address bus, a data bus, a control bus, etc. For ease of representation, only one thick line is used in FIG. 8, but it does not mean that there is only one bus or one type of bus.

The memory 8003 may be a read-only memory (ROM) or other types of static storage devices that can store static information and instructions, a random access memory (RAM) or other types of dynamic storage devices that can store information and instructions, or an electrically erasable programmable read-only memory (EEPROM), a compact disc read-only memory (CD-ROM) or other optical disk storage, optical disc storage (including compressed optical disc, laser disc, optical disc, digital versatile disc, Blu-ray disc, etc.), a magnetic disk storage medium or other magnetic storage device, or any other medium that can be configured to carry or store the desired program code in the form of instructions or data structures and can be accessed by a computer, but is not limited thereto.

The embodiment of the present disclosure provides a computer-readable storage medium, on which a computer program is stored, and when the computer is run on the computer, the computer can execute the corresponding content in the aforementioned method embodiment.

It should be understood that although the steps in the flowchart of the accompanying drawings are displayed in sequence as indicated by the arrows, these steps are not necessarily executed in sequence in the order indicated by the arrows. Unless otherwise specified herein, the execution of these steps is not strictly limited in order, and they can be executed in other orders. Moreover, at least part of the steps in the flowchart of the attached figure may include multiple sub-steps or multiple stages, and these sub-steps or stages are not necessarily executed at the same time, but can be executed at different times, and their execution order is not necessarily sequential, but can be executed in turn or alternately with other steps or at least part of the sub-steps or stages of other steps.

It should be noted that the computer-readable storage medium disclosed above can be a computer-readable signal medium or a computer-readable storage medium or any combination of the above two. The computer-readable storage medium can be, for example, - but not limited to - an electrical, magnetic, optical, electromagnetic, infrared, or semiconductor system, apparatus or device, or any combination of the above. More specific examples of computer-readable storage media can include, but are not limited to: an electrical connection with one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium containing or storing a program that can be used by or in combination with an instruction execution system, apparatus, or device. In the present disclosure, a computer-readable signal medium may include a data signal propagated in a baseband or as part of a carrier wave, which carries a computer-readable program code. Such propagated data signals may take a variety of forms, including but not limited to electromagnetic signals, optical signals, or any suitable combination of the above. A computer-readable signal medium may also be any computer-readable storage medium other than a computer-readable storage medium, which may transmit, propagate, or transmit a program for use by or in combination with an instruction execution system, apparatus, or device. The program code contained on the computer-readable storage medium may be transmitted using any appropriate medium, including but not limited to wires, optical cables, RF (radio frequency), etc., or any suitable combination of the above.

The above-mentioned computer-readable storage medium may be contained in the above-mentioned sensing measurement initiating device or sensing measurement responding device; or it may exist alone without being assembled into the sensing measurement initiating device or sensing measurement responding device.

The computer-readable storage medium carries one or more programs. When the one or more programs are executed by the sensing measurement initiating device or the sensing measurement responding device, the sensing measurement initiating device or the sensing measurement responding device executes the corresponding communication method.

According to one aspect of the present disclosure, a computer program product or a computer program is provided, and the computer program product or the computer program includes computer instructions, and the computer instructions are stored in a computer-readable storage medium. The processor of the computer device reads the computer instructions from the computer-readable storage medium, and the processor executes the computer instructions, so that the computer device executes the communication method provided in the above-mentioned various embodiments.

The computer program code for performing the operation of the present disclosure can be written in one or more programming languages or a combination thereof, and the above programming languages include object-oriented programming languages-such as Java, Smalltalk, C++, and also conventional procedural programming languages-such as "C" language or similar programming languages. The program code can be executed completely on the user's computer, partially on the user's computer, as an independent software package, partially on the user's computer and partially on a remote computer, or completely on a remote computer or server. In a case involving a remote computer, the remote computer may be connected to the user's computer through any type of network, including a local area network (LAN) or a wide area network (WAN), or may be connected to an external computer (e.g., through the Internet using an Internet service provider).

The flowcharts and block diagrams in the accompanying drawings illustrate the possible architecture, functions and operations of the systems, methods and computer program products according to various embodiments of the present disclosure. In this regard, each box in the flowchart or block diagram may represent a module, a program segment, or a portion of a code, which contains one or more executable instructions for implementing the specified logical functions. It should also be noted that in some alternative implementations, the functions marked in the box may also occur in a different order than that marked in the accompanying drawings. For example, two boxes represented in succession can actually be executed substantially in parallel, and they can sometimes be executed in the opposite order, depending on the functions involved. It should also be noted that each box in the block diagram and/or flowchart, and the combination of boxes in the block diagram and/or flowchart, can be implemented by a dedicated hardware-based system that performs the specified functions or operations, or can be implemented by a combination of dedicated hardware and computer instructions.

The modules involved in the embodiments described in the present disclosure can be implemented by software or by hardware. The name of the module does not constitute a limitation on the module itself in some cases. For example, module A can also be described as "module A for performing operation B".

The above description is only a preferred embodiment of the present disclosure and an explanation of the technical principles used. Those skilled in the art should understand that the scope of disclosure involved in the present disclosure is not limited to the technical solutions formed by a specific combination of the above technical features, but should also cover other technical solutions formed by any combination of the above technical features or their equivalent features without departing from the concept of the present disclosure. For example, the above features are replaced with the technical features with similar functions disclosed in the present disclosure (but not limited to) by each other to form a technical solution.

## Claims

1. A communication method, performed by a sensing measurement initiating device, comprising:
determining a sensing measurement setup request frame, wherein the sensing measurement setup request frame comprises a first sensing measurement parameter information element, the first sensing measurement parameter information element comprises a first sensing receiver information field, the first sensing receiver information field identifies that the sensing measurement initiating device receive an Null Data Packet NDP frame during a responder to responder R2R measurement process in a sensing by proxy SBP through a first value, and identifies that the sensing measurement initiating device does not receive the NDP frame during the R2R measurement process through a second value; and
transmitting the sensing measurement setup request frame.

2. The method according to claim 1, wherein the first sensing measurement parameter information element comprises first indication information, and the first indication information is configured to indicate a request to setup an R2R measurement.

3. The method according to claim 1, wherein the first sensing measurement parameter information element comprises a first sensing measurement report information field, the first sensing measurement report information field identifies that the sensing measurement initiating device does not transmit a sensing measurement result through a third value, and identifies that the sensing measurement initiating device transmits the sensing measurement result through a fourth value.

4. The method according to claim 1, wherein the sensing measurement setup request frame further comprises first indication information, the first indication information is configured to indicate a representation manner of multiple information fields comprised in a second sensing measurement parameter information element in a sensing measurement setup response frame sent by a sensing measurement responding device, and the second sensing measurement parameter information element comprises a second sensing receiver information field, a transmitter information field and a second sensing measurement report information field.

5. The method according to claim 4, wherein the representation manner of the multiple information fields comprised in the second sensing measurement parameter information element comprises at least one of:
the transmitter information field identifies that the sensing measurement responding device does not transmit the NDP frame during the R2R measurement process through a fifth value, the second sensing receiver information field identifies that the sensing measurement responding device receives the NDP frame during the R2R measurement process through a sixth value, and the second sensing measurement report information field identifies that the sensing measurement responding device transmits a sensing measurement result through a seventh value; and
the transmitter information field identifies that the sensing measurement responding device transmits the NDP frame during the R2R measurement process through an eighth value, the second sensing receiver information field identifies that the sensing measurement responding device does not receive the NDP frame during the R2R measurement process through a ninth value, and the second sensing measurement report information field identifies that the sensing measurement responding device does not transmit the sensing measurement result through a tenth value.

6. The method according to claim 1, wherein the method further comprises:
receiving a sensing measurement setup response frame, wherein the sensing measurement setup response frame comprises a second sensing measurement information element, the second sensing measurement parameter information element comprises a second sensing receiver information field, a transmitter information field and a second sensing measurement report information field;
the transmitter information field identifies that a sensing measurement responding device does not transmit the NDP frame during the R2R measurement process through a fifth value, the second sensing receiver information field identifies that the sensing measurement responding device receives the NDP frame during the R2R measurement process through a sixth value, and the second sensing measurement report information field identifies that the sensing measurement responding device transmits a sensing measurement result through a seventh value;
or, the transmitter information field identifies that the sensing measurement responding device transmits the NDP frame during the R2R measurement process through an eighth value, the second sensing receiver information field identifies that the sensing measurement responding device does not receive the NDP frame during the R2R measurement process through a ninth value, and the second sensing measurement report information field identifies that the sensing measurement responding device does not transmit the sensing measurement result through a tenth value.

7. A communication method, performed by a sensing measurement responding device, comprising:
receiving a sensing measurement setup request frame, wherein the sensing measurement setup request frame comprises a first sensing measurement parameter information element, the first sensing measurement parameter information element comprises a first sensing receiver information field, the first sensing receiver information field identifies that a sensing measurement initiating device receives an Null Data Packet NDP frame during a responder to responder R2R measurement process in a sensing by proxy SBP through a first value, and identifies that the sensing measurement initiating device does not receive the NDP frame during the R2R measurement through a second value.

8. The method according to claim 7, wherein the first sensing measurement parameter information element comprises first indication information, and the first indication information is configured to indicate a request to setup an R2R measurement.

9. The method according to claim 7, wherein the first sensing measurement parameter information element comprises a first sensing measurement report information field, the first sensing measurement report information field identifies that the sensing measurement initiating device does not transmit a sensing measurement result through a third value, and identifies that the sensing measurement initiating device transmits the sensing measurement result through a fourth value.

10. The method according to claim 7, wherein the sensing measurement setup request frame further comprises first indication information, the first indication information is configured to indicate a representation manner of multiple information fields comprised in a second sensing measurement parameter information element in a sensing measurement setup response frame sent by the sensing measurement responding device, and the second sensing measurement parameter information element comprises a second sensing receiver information field, a transmitter information field and a second sensing measurement report information field.

11. The method according to claim 10, wherein the representation manner of the multiple information fields comprised in the second sensing measurement parameter information element comprises at least one of:
the transmitter information field identifies that the sensing measurement responding device does not transmit the NDP frame during the R2R measurement process through a fifth value, the second sensing receiver information field identifies that the sensing measurement responding device receives the NDP frame during the R2R measurement process through a sixth value, and the second sensing measurement report information field identifies that the sensing measurement responding device transmits a sensing measurement result through a seventh value; and
the transmitter information field identifies that the sensing measurement responding device transmits the NDP frame during the R2R measurement process through an eighth value, the second sensing receiver information field identifies that the sensing measurement responding device does not receive the NDP frame during the R2R measurement process through a ninth value, and the second sensing measurement report information field identifies that the sensing measurement responding device does not transmit the sensing measurement result through a tenth value.

12. The method according to claim 7, wherein the method further comprises:
transmitting a sensing measurement setup response frame, the sensing measurement setup response frame comprises a second sensing measurement information element, the second sensing measurement parameter information element comprises a second sensing receiver information field, a transmitter information field and a second sensing measurement report information field;
the transmitter information field identifies that the sensing measurement responding device does not transmit the NDP frame during the R2R measurement process through a fifth value, the second sensing receiver information field identifies that the sensing measurement responding device receives the NDP frame during the R2R measurement process through a sixth value, and the second sensing measurement report information field identifies that the sensing measurement responding device transmits a sensing measurement result through a seventh value;
or, the transmitter information field identifies that the sensing measurement responding device transmits the NDP frame during the R2R measurement process through an eighth value, the second sensing receiver information field identifies that the sensing measurement responding device does not receive the NDP frame during the R2R measurement process through a ninth value, and the second sensing measurement report information field identifies that the sensing measurement responding device does not transmit the sensing measurement result through a tenth value.

13. A communication device, comprising:
a determining unit, configured to determine a sensing measurement setup request frame, wherein the sensing measurement setup request frame comprises a first sensing measurement parameter information element, the first sensing measurement parameter information element comprises a first sensing receiver information field, the first sensing receiver information field identifies that a sensing measurement initiating device receives an Null Data Packet NDP frame during a responder to responder R2R measurement process in a sensing by proxy SBP through a first value, and identifies that the sensing measurement initiating device does not receive the NDP frame during the R2R measurement process through a second value; and
a first transceiver unit, configured to transmit the sensing measurement setup request frame.

14. A communication device, comprising:
a second transceiver unit, configured to receive a sensing measurement setup request frame, wherein the sensing measurement setup request frame comprises a first sensing measurement parameter information element, the first sensing measurement parameter information element comprises a first sensing receiver information field, the first sensing receiver information field identifies that a sensing measurement initiating device receives an Null Data Packet NDP frame during a responder to responder R2R measurement process in a sensing by proxy SBP through a first value, and identifies that the sensing measurement initiating device does not receive the NDP frame during the R2R measurement through a second value.

15. A sensing measurement initiating device, wherein the sensing measurement responding device comprises a memory, a processor, and a computer program stored on the memory and executable on the processor, wherein the processor implements the method according to any one of claims 1 to 6 when executing the program.

16. A sensing measurement responding device, wherein the sensing measurement initiating device comprises a memory, a processor, and a computer program stored on the memory and executable on the processor, wherein the processor implements the method according to any one of claims 7 to 12 when executing the program.

17. A computer-readable storage medium, wherein a computer program is stored on the computer-readable storage medium, and when the computer program is executed by a processor, the method according to any one of claims 1 to 12 is implemented.
